# EUROPÄISCHE PATENTANMELDUNG

(11) **EP 2 080 584 A1**
(43) Veröffentlichungstag der Anmeldung: **22.07.2009**
(21) Anmeldenummer: 08020096.7
(22) Anmeldetag: 18.11.2008
(51) Int. Cl.: B23Q 17/22

(54) **Vorrichtung und Verfahren zum Bearbeiten von Werkstücken**

(30) Priorität: 17.01.2008 DE 102008004849
(71) Anmelder: VOLLMER WERKE Maschinenfabrik GmbH, 88400 Biberach/Riss (DE)
(72) Erfinder: Bailer, Norbert, 88433 Schemmerhofen-Altheim (DE); Bott, Joachim, 88454 Hochdorf (DE); Bailer, Peter, 88433 Schemmerhofen-Altheim (DE); Brand, Stefan, Dr., 88487 Mietingen-Walpertshofen (DE)
(74) Vertreter: Thum, Bernhard

(57) **Zusammenfassung**

Die Erfindung betrifft eine Vorrichtung (10) zum Bearbeiten, insbesondere Erodieren und Schleifen, von Werkstücken (44), mit einer Maschinenbasis (12), einer relativ zu der Maschinenbasis (12) verlagerbaren Bearbeitungseinrichtung (14), und einer relativ zur Maschinenbasis (12) verlagerbaren Werkstückpositioniereinrichtung (18), wobei die Bearbeitungseinrichtung (14) ein relativ zur Maschinenbasis (12) verlagerbares, drehantreibbares Bearbeitungswerkzeug (30) zur Bearbeitung des Werkstücks (44) aufweist, wobei weiter die Werkstückpositioniereinrichtung (18) eine relativ zur Maschinenbasis (12) verlagerbare Werkstückaufnahmeeinrichtung (46) zum Aufnehmen des Werkstücks (44) aufweist, und wobei an der Werkstückaufnahmeeinrichtung (46) eine Mehrachs-Referenziersensoranordnung (60) vorgesehen ist, mit der die Relativlage zwischen Werkstückaufnahmeeinrichtung (46) und Bearbeitungswerkzeug (30) in wenigstens zwei Dimensionen erfassbar ist. Die Erfindung betrifft ferner ein Verfahren zum durchführen einer Bearbeitung mit einer solchen Vorrichtung (10).

## Beschreibung

Die vorliegende Erfindung betrifft eine Vorrichtung und ein Verfahren zum Bearbeiten, insbesondere Erodieren und Schleifen, von Werkstücken, mit einer Maschinenbasis, einer relativ zu der Maschinenbasis verlagerbaren Bearbeitungseinrichtung, und einer relativ zur Maschinenbasis verlagerbaren Werkstückpositioniereinrichtung, wobei die Bearbeitungseinrichtung ein relativ zur Maschinenbasis verlagerbares, drehantreibbares Bearbeitungswerkzeug zur Bearbeitung des Werkstücks aufweist, wobei weiter die Werkstückpositioniereinrichtung eine relativ zur Maschinenbasis verlagerbare Werkstückaufnahmeeinrichtung zum Aufnehmen des Werkstücks aufweist.

Aus dem Stand der Technik sind eine Vielzahl von Werkzeugmaschinen bekannt, mit denen verschiedenartige Werkstücke bearbeitet werden können. Je nach Komplexität der Bearbeitungsaufgabe können Abweichungen von einer Soll- Relativlage zwischen Werkstückaufnahme und Bearbeitungseinrichtung zu erheblichen Einbußen in der Qualität des Bearbeitungsergebnisses führen. Derartige Abweichungen treten beispielsweise aufgrund von thermischen Ausdehnungseffekten, einem Driften einzelner Komponenten, aufgrund von Verschleißeffekten, insbesondere durch Abnutzung des Bearbeitungswerkzeugs, durch Biegebelastungen oder aber auch aufgrund von Toleranzen bei der Einspannung des Werkzeugs oder des Werkstücks auf. Darüber hinaus ist es in modernen Bearbeitungszentren heutzutage üblich, so genannte Plausibilitätskontrollen oder Sicherheitskontrollen durchzuführen, um eine fehlerhafte Bearbeitung des Werkstücks zu vermeiden. In derartigen Kontrollen können beispielsweise die richtige Auswahl des gewählten Werkzeugs, eine korrekte Achsausrichtung etc. abgefragt werden.

Aus dem Dokument DE 103 30 915 A1 ist ein Verfahren zur Kompensation von Abweichungen in der Relativlage einzelner Maschinenkomponenten, beispielsweise in Folge thermischer Ausdehnungen, bekannt, bei dem ein Werkstück auf einem fest installierten Werkstücktisch angeordnet ist und mit einer entlang dreier Raumachsen verfahrbaren Werkzeugspindel mit darin angebrachtem Fräswerkzeug bearbeitbar ist. Am Werkzeugtisch ist ferner eine Lichtschranke mit einem Sender und einem Empfänger angeordnet, wobei sich die Relativlage von Sender und Empfänger und damit die Position des Lichtstrahls auf dem Werkstücktisch in Folge der vorstehend genannten Abweichungen während des Betriebs ändern kann. Um derartige Abweichungen erfassen zu können, wird die Werkzeugspindel mit dem Werkzeug in vorbestimmter Weise durch die Lichtschranke hindurchgeführt, wobei der Lichtstrahl unterbrochen wird. Dies kann erfasst werden und aus den erfassten Messergebnissen wird versucht, auf die Abweichungen rückzuschließen. Diese Anordnung unterliegt aber dem Problem, dass nur entlang des einzigen Lichtstrahls gemessen werden kann. Aus diesem Grund wird davon ausgegangen, dass bestimmte Randbedingungen konstant sind, wie etwa die Abmessungen des Werkzeugs. Sobald allerdings Verschleiß am Werkzeug auftritt, wird die Messung äußerst ungenau, was zu einer fehlerhaften Referenzzierung und damit auch zu einer fehlerhaften Kompensation der Abweichungen zwischen Soll-Relativlage und Ist-Relativlage führen kann.

Schließlich ist noch auf das Dokument DE 196 07 599 A1 zum technischen Hintergrund zu verweisen.

Eine Vorrichtung der eingangs bezeichneten Art ist beispielsweise aus dem Dokument DE 10 2005 020 035 A1 bekannt. Bei dieser Vorrichtung ist eine Bearbeitungseinrichtung an einer Bearbeitungsbrücke angeordnet. Die Bearbeitungseinrichtung weist ein im wesentlichen in vertikaler Richtung hängendes Bearbeitungswerkzeug auf. Das zu bearbeitende Werkstück ist an einer Werkstückpositioniereinrichtung angebracht, wobei diese das Werkstück im Wesentlichen in horizontaler Richtung ausrichtet, so dass der Funktionsabschnitt des Rotationswerkstücks je nach Kippstellung mehr oder weniger horizontal gerichtet ist.

Es hat sich jedoch gezeigt, dass insbesondere bei derartigen komplexen Maschinen, mit denen aufwändige Bearbeitungen durchgeführt werden, zusätzliche Referenzierschritte Vorteile bringen könnten.

Es ist Aufgabe der vorliegenden Erfindung, eine Vorrichtung und ein Verfahren der eingangs bezeichneten Art bereitzustellen, womit komplexe Bearbeitungssituationen zur Bearbeitung durch einfache Durchführung von Referenzierschritten präziser ausgeführt werden können.

Diese Aufgabe wird durch eine Vorrichtung der eingangs bezeichneten Art gelöst, bei der vorgesehen ist, dass an der Werkstückaufnahmeeinrichtung eine Mehrachs-Referenziersensoranordnung vorgesehen ist, mit der die Relativlage zwischen Werkstückaufnahmeeinrichtung und Bearbeitungswerkzeug in wenigstens zwei Dimensionen erfassbar ist.

Durch die Bereitstellung einer Mehrachs-Referenziersensoranordnung an der Werkstückaufnahmeeinrichtung lässt sich während des Bearbeitungsprozesses in einer kurzen Bearbeitungspause mit den zur Bearbeitung genutzten Komponenten und den hierfür genutzten translatorischen sowie rotatorischen Achsen eine zuverlässige von Störeinflüssen weitgehend freie Referenzierung durchführen, indem die Relativlage zwischen Werkstückaufnahmeeinrichtung und Bearbeitungswerkzeug in mehreren Dimensionen bestimmt wird. Dadurch können die vorstehend geschilderten Störeinflüsse, wie Abweichungen von einer Soll- Relativlage zwischen Werkstückaufnahme und Bearbeitungseinrichtung aufgrund von thermischen Ausdehnungseffekten, einem Driften einzelner Komponenten, Verschleißeffekten, insbesondere durch Abnutzung des Bearbeitungswerkzeugs, durch Biegebelastungen oder aber auch aufgrund von Toleranzen bei der Einspannung des Werkzeugs oder des Werkstücks, bei der Bearbeitung kompensiert werden. Ferner können damit vereinfacht Plausibilitätskontrollen oder Sicherheitskontrollen durchgeführt werden.

Gemäß einer Ausführungsvariante der Erfindung kann vorgesehen sein, dass die Mehrachs-Referenziersensoranordnung jeweils einen Referenzsensor in jeder Raumachsenrichtung aufweist. Dadurch lässt sich die exakte Relativlage zwischen Werkstückaufnahmeeinrichtung und Bearbeitungswerkzeug im Raum bestimmen.

Hinsichtlich der Mehrachs-Referenziersensoranordnung kann vorgesehen sein, dass jeder der Referenzsensoren jeweils als Berührungssensor oder als berührungsloser Näherungssensor ausgebildet ist. So ist es möglich, hochempfindliche Berührungssensoren zu verwenden, die bereits bei einer Belastung von wenigen Millinewton (mN) ansprechen. Als berührungslose Sensoren lassen sich beispielsweise induktive Sensoren oder optische Sensoren verwenden.

Ferner kann erfindungsgemäß vorgesehen sein, dass die Mehrachs-Referenziersensoranordnung an einem Sensorträger angeordnet ist, wobei der Sensorträger Sensorträger-Flächen aufweist, die im wesentlichen orthogonal zu den Raumachsenrichtungen ausgerichtet sind. So kann der Sensorträger beispielsweise ein kubisches Element sein, das an einer Stirnfläche der Werkstückaufnahmeeinrichtung angeordnet ist.

Gemäß einer Ausführungsvariante der Erfindung kann vorgesehen sein, dass die Bearbeitungseinrichtung oder die Werkstückaufnahmeeinrichtung auf einer Kreuzschlittenanordnung mit zueinander im wesentlichen orthogonalen, horizontal verlaufenden Schlittenachsen angeordnet ist. Dadurch lässt sich das Bearbeitungswerkzeug oder das Werkstück in gewünschter Weise verlagern.

Zum Antreiben des Bearbeitungswerkzeugs kann erfindungsgemäß vorgesehen sein, dass die Bearbeitungseinrichtung eine um eine Bearbeitungsspindelachse drehantreibbare Bearbeitungsspindel aufweist. Diese ist beispielsweise auf der Kreuzschlittenanordnung angebracht und kann so in gewünschter Weise positioniert werden.

Die vorstehend geschilderten komplexen Bearbeitungssituationen beispielsweise bei der Bearbeitung von mit Schneidzähnen versehenen Rotationswerkstücken machen es häufig erforderlich, neben der üblichen translatorischen Verlagerung von Rotationswerkstück und Bearbeitungswerkzeug zueinander auch eine schräge Anordnung dieser Komponenten zueinander vorzunehmen. Um eine derartige schräge Anordnung zu erreichen, kann erfindungsgemäß vorgesehen sein, dass die Bearbeitungseinrichtung eine Spindelschwenkeinrichtung aufweist, mittels der die Bearbeitungsspindel um eine Spindelschwenkachse derart verschwenkbar ist, dass die Bearbeitungsspindelachse sowohl in horizontale als auch in vertikale Lage sowie in Zwischenstellungen bringbar ist. Erfindungsgemäß ist es möglich, die Bearbeitungsspindelachse um bis zu 210° oder mehr um die Spindelschwenkachse zu verschwenken. Dadurch lässt sich das Bearbeitungswerkzeug in jede beliebige Winkelausrichtung relativ zu dem zu bearbeitenden Rotationswerkstück bringen, so dass auch komplexe Bearbeitungssituationen aufgrund einer komplexen Geometrie des Funktionsabschnitts bewältigt werden können.

Eine Weiterbildung der Erfindung sieht vor, dass die Werkstückpositioniereinrichtung eine um eine Werkstückaufnahmespindelachse drehantreibbare Werkstückaufnahmespindel aufweist. Durch diese Maßnahme lässt sich das Rotationswerkstück um seine Längsachse in jede beliebige Drehstellung bringen und in dieser fixieren. Auch dadurch wird es möglich, dass mit dem Bearbeitungswerkzeug beliebige Punkte am Werkstück bearbeitet werden können.

Ferner kann vorgesehen sein, dass die Werkstückpositioniereinrichtung eine Spindelkippeinrichtung aufweist, mittels der die Werkstückaufnahmespindel um eine Spindelkippachse derart verschwenkbar ist, dass das zu bearbeitende Rotationswerkstück in vertikale Schrägstellung bringbar ist. Hierzu ist anzumerken, dass die Grundausrichtung des Rotationswerkstücks trotz Schrägstellung weiterhin im wesentlichen vertikal bleibt. Es ist beispielsweise eine maximale Schrägstellung von +/- 15° aus der exakten Vertikalausrichtung heraus vorgesehen. Durch die Möglichkeit einer Schrägstellung des Rotationswerkstücks zur Bearbeitung ergeben sich weitere Freiheiten zur Bearbeitung komplexer Geometrien von Funktionsabschnitten an Rotationswerkstücken.

Gemäß einer weiteren Ausführungsvariante kann die erfindungsgemäße Vorrichtung ferner eine Werkstückwechseleinrichtung zum Aufnehmen und Wechseln des zu bearbeitenden Werkstücks aufweisen. Dabei kann vorgesehen sein, dass die Werkstückwechseleinrichtung einen an der Bearbeitungseinrichtung angebrachten Werkstückwechselarm aufweist, der um eine Wechselarmschwenkachse relativ zur Bearbeitungseinrichtung zu einem Werkstückmagazin hin schwenkbar ist. So kann die Bearbeitungseinrichtung zum Wechseln des Werkstücks über die Kreuzschlittenanordnung in eine gewünschte Relativposition zu dem zu wechselnden Werkstück gebracht werden. Danach kann der Werkstückwechselarm an dem Werkstück angreifen und in dieses durch Verschwenken, beispielsweise über Kopf um 180° in das Werkstückmagazin einlegen. In der Folge kann der Werkstückwechselarm ein weiteres zu bearbeitendes Werkstück aus dem Werkstückmagazin entnehmen.

Die Erfindung betrifft ferner ein Verfahren zum Bearbeiten, insbesondere Erodieren und Schleifen, von Werkstücken, mit einer Vorrichtung der vorstehend beschriebenen Art, wobei das Verfahren die Schritte umfasst:
- Aufnehmen eines zu bearbeitenden Werkstücks in der Werkstückaufnahmeeinrichtung,
- Bestücken der Bearbeitungseinrichtung mit einem Bearbeitungswerkzeug,
- Erfassen einzelner Komponenten der Relativlage zwischen der Werkstückaufnahmeeinrichtung relativ zu dem an der Bearbeitungseinrichtung angebrachten Bearbeitungswerkzeug, wobei das Bearbeitungswerkzeug im Bereich einer mit dem Werkstück zur Bearbeitung in Kontakt tretenden Bearbeitungsstelle mittels der Referenzier-Sensoranordnung in wenigstens zwei Dimensionen abgetastet wird,
- Bestimmen der Relativlage zwischen der Werkstückaufnahmeeinrichtung und der Bearbeitungseinrichtung nach Maßgabe der mit der Referenzier-Sensoranordnung bestimmten Komponenten der Relativlage in den wenigstens zwei Dimensionen, und
- Durchführen der Bearbeitung des Werkstücks mittels der Bearbeitungseinrichtung nach Maßgabe der bestimmten Relativlage zwischen der Werkstückaufnahmeeinrichtung und der Bearbeitungseinrichtung.

Dieses Verfahren kann in verschiedenen Situationen durchgeführt werden. So kann erfindungsgemäß vorgesehen sein, dass die Relativlage zwischen der Werkstückaufnahmeeinrichtung und der Bearbeitungseinrichtung vor einer erstmaligen Bearbeitung eines Werkstücks, zwischen zwei Bearbeitungsschritten, nach einem Auswechseln des Bearbeitungswerkzeuges oder nach einer bestimmten Zeitperiode eine Bearbeitung durchgeführt wird.

Die Erfindung wird im Folgenden beispielhaft anhand der beiliegenden Figuren erläutert. Es stellen dar:
- Figur 1: eine perspektivische Gesamtansicht der erfindungsgemäßen Vorrichtung,
- Figur 2: einen vergrößerten Bildausschnitt der perspektivischen Ansicht aus Figur 1, welcher die Bearbeitungssituation im Detail darstellt,
- Figur 3: eine perspektivische Ansicht der erfindungsgemäßen Vorrichtung von oben,
- Figur 4: eine perspektivische Detaildarstellung zur Erläuterung der Übergabe eines Werkzeugträgers an das Magazin,
- Figur 5: eine Vorderansicht eines Werkzeugträgers mit Werkzeug und Schmiermittelzufuhranordnung,
- Figur 6: eine Seitenansicht des Werkzeugträgers aus Figur 5,
- Figur 7: eine Schnittansicht des Werkzeugträgers gemäß Figur 6,
- Figur 8: eine perspektivische Ansicht zur Erläuterung einer Referenziersituation zwischen Werkstückpositioniereinrichtung und Bearbeitungswerkzeug,
- Figur 9: eine perspektivische Ansicht zur Erläuterung einer weiteren Referenziersituation zwischen Werkstückpositioniereinrichtung und Bearbeitungswerkzeug,

- Figur 10: eine perspektivische Ansicht zur Erläuterung einer weiteren Referenziersituation zwischen Werkstückpositioniereinrichtung und Bearbeitungswerkzeug und
- Figur 11: einen vergrößerten Bildausschnitt entsprechend Figur 2, welcher eine weitere Bearbeitungssituation im Detail darstellt,

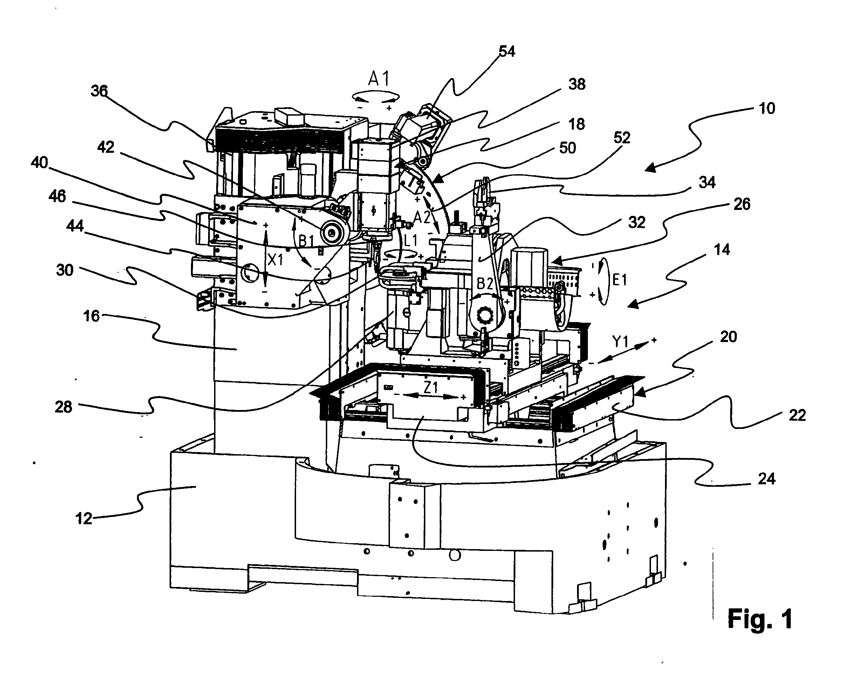

Figur 1 zeigt in perspektivischer Gesamtdarstellung eine erfindungsgemäße Vorrichtung, die allgemein mit dem Bezugszeichen 10 bezeichnet ist. Diese als Schleif- und Erodiermaschine ausgebildete Vorrichtung 10 weist eine Maschinenbasis 12 auf, an der eine Bearbeitungseinrichtung 14 angebracht ist. Die Maschinenbasis 12 weist eine Säulenstruktur 16 auf, an der eine Werkstückpositioniereinrichtung 18 angebracht ist.

Die Bearbeitungseinrichtung 14 weist eine Kreuzschlittenanordnung 20 auf, mit einem ersten Schlitten 22, der entlang der Richtung Z1 verfahrbar ist und mit einem zweiten Schlitten 24, der entlang der Richtung Y1 verfahrbar ist. Die beiden Schlitten sowie sämtliche weitere Achsen zum Verlagern von Maschinenkomponenten sind jeweils in CNC gesteuert.

Auf der Schlittenanordnung 20 ist ein Bearbeitungskopf 26 angebracht, der an seinem in Figur 1 linken Bereich eine Bearbeitungsspindel 28 aufweist. Die Bearbeitungsspindel 28 ist an ihrem in Figur 1 oberen Ende mit einer weiter unten im Detail erläuterten Werkzeugträgereinrichtung 90 koppelbar, die ein Bearbeitungswerkzeug 30 aufweist. Das Bearbeitungswerkzeug 30, im dargestellten Fall eine Schleifscheibe, ist um eine Drehachse L1 drehantreibbar.

Die Bearbeitungsspindel 28 lässt sich an dem Bearbeitungskopf 26 um eine Drehachse E1 beliebig drehen, insbesondere in die gezeigte Vertikalstellung, aber auch in Horizontalstellungen.

An dem Bearbeitungskopf 26 ist ferner eine Werkstückwechseleinrichtung in Form eines Werkstückwechselarms 32 angebracht. Dieser Werkstückwechselarm 32 ist um eine Wechselarmschwenkachse B2 verschwenkbar. Er weist an seinem in Figur 1 oberen Ende einen Greifer 34 auf.

Wendet man sich nun der Werkstückpositioniereinrichtung 18 zu, so erkennt man, dass auch diese entlang der Säulenstruktur 16 über Führungen 36 entlang der Richtung X1 verlagerbar ist. Die Werkstückpositioniereinrichtung 18 weist ferner eine Werkstückaufnahmespindel 38 auf. Diese Werkstückaufnahmespindel 38 ist drehantreibbar wie durch den Drehpfeil A1 angedeutet. Darüber hinaus ist die Werkstückaufnahmespindel an dem in vertikaler Richtung X1 verlagerbaren Schlitten 40 um eine Schwenkachse B1 an einem Drehlager 42 in gewissem Maß verkippbar.

In Figur 1 erkennt man auch ein Rotationswerkstück 44, das an einer Werkstückaufnahmeeinrichtung 46 drehfest aufgenommen und eingespannt ist. Bei dem Rotationswerkstück 44 handelt es sich um einen Schaftfräser, der mittels der Schleifscheibe 30 an einzelnen Schneiden bearbeitet werden muss.

Figur 1 lässt ferner ein Magazin 50 erkennen, das eine gemäß dem Drehpfeil A2 drehbare Magazinscheibe 52 aufweist. Die Magazinscheibe 52 ist mit einer umlaufenden Außenverzahnung versehen und lässt sich über den Drehantrieb 54 drehantreiben.

Die erfindungsgemäße Vorrichtung 10, wie sie in Figur 1 gezeigt ist, besitzt die Besonderheit, dass das zu bearbeitende Rotationswerkstück 44 in vertikal hängender Anordnung an der Werkstückpositioniereinrichtung 18 angebracht ist. Es lässt sich in dieser hängenden Anordnung über die Bearbeitungseinrichtung 14 bearbeiten. Dabei wird das Bearbeitungswerkzeug 30 über die Kreuzschlittenanordnung 20 in horizontaler Richtung zu dem Rotationswerkstück 44 ausgerichtet. Ferner kann das Bearbeitungswerkzeug 30 auch durch Schwenken der Bearbeitungsspindel 28 gemäß der Achse E1 verschwenkt werden. In Richtung X1 wird das Rotationswerkstück 44 durch Verlagern des Schlittens 40 an der Säulenstruktur 16 positioniert. Bei Bedarf kann das Rotationswerkstück 44 auch um die Achse B1 verkippt werden, um besonders komplizierte Geometrien an dem zu bearbeitenden Funktionsabschnitt des Rotationswerkstücks 44 bearbeiten zu können.

Das Rotationswerkstück 44 kann über den Werkstückwechselarm 32 nach einer Bearbeitung aus der Werkstückpositioniereinrichtung 18 entnommen werden. Auch hierfür erfolgen die Verfahrbewegungen über die Kreuzschlittenanordnung 20 sowie den zusätzlichen Schlitten 40. Der Werkstückwechselarm 32 lässt sich um die Achse B2 um mindestens 180° drehen, so dass das Rotationswerkstück 44 nach Entnahme aus der Werkstückpositioniereinrichtung 18 sozusagen "über Kopf" in ein in Figur 1 nicht mehr gezeigtes Magazin einsetzbar und in der Folge aus diesem Magazin ein weiteres zu bearbeitendes Werkstück entnehmbar ist, das dann wieder in die Werkstückpositioniereinrichtung 18 eingesetzt werden kann.

Das Magazin 50 dient zur Aufnahme einer Vielzahl von Bearbeitungswerkzeugen 30. Je nach Bedarf lässt sich die Bearbeitungseinrichtung 14 mit einem geeigneten Bearbeitungswerkzeug 30 bestücken, das in dem Magazin 50 aufgenommen ist. Das gewünschte Bearbeitungswerkzeug wird durch entsprechende Drehung der Drehscheibe 52 in eine Übergabeposition verdreht. Die Bearbeitungseinrichtung 14 kann durch eine Verfahrbewegung auf der Kreuzschlittenanordnung 20 sowie durch Verschwenken der Spindel 28 um die Achse E1 zur Abgabe und zum Aufnehmen eines neuen Bearbeitungswerkzeugs entsprechend positioniert werden.

Insgesamt erkennt man in Figur 1, dass mit der erfindungsgemäßen Vorrichtung eine kompakte Maschine vorliegt, mit der komplexe Bearbeitungsaufgaben bewältigt werden können, wie sie sich bei der Bearbeitung von Rotationswerkstücken stellen. Ein wesentlicher Vorteil dieser Maschine liegt darin, dass das Rotationswerkstück 44 in hängender Ausrichtung bearbeitet wird, so dass gravitationsbedingte Belastungen, die insbesondere bei langen schaftartigen Rotationswerkstücken als Biegebelastungen auftreten, vermieden werden können. Während der Bearbeitung auftretende Späne und Materialabtrag fallen nach unten, so dass sie die Werkstückpositioniereinrichtung 18 und insbesondere die Werkstückaufnahmeeinrichtung 46 nicht verschmutzen.

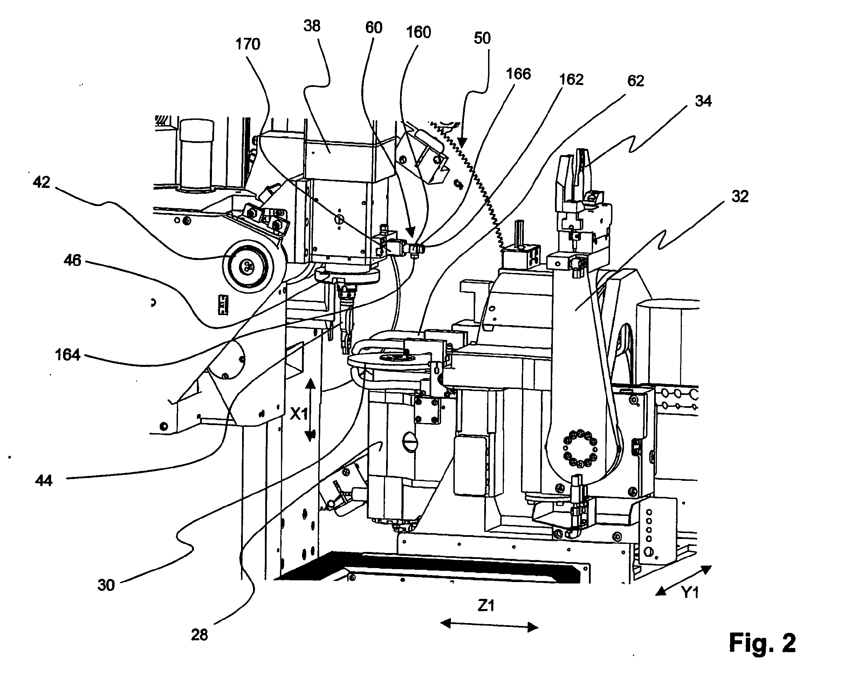

Figur 2 zeigt einen vergrößerten Ausschnitt, der eine konkrete Bearbeitungssituation darstellt. Man erkennt im zentralen Bereich von Figur 2 das zu bearbeitende Rotationswerkstück 44, das in der Werkstückaufnahmeeinrichtung 46 mit seinem nicht gezeigten Aufnahmeabschnitt aufgenommen und fest eingespannt ist. Das Rotationswerkstück 44 befindet sich in im Wesentlichen vertikaler Ausrichtung, d.h. die Werkstückaufnahmespindel 38 liegt derart, dass ihre Drehachse im Wesentlichen vertikal gerichtet ist. Man erkennt ferner, dass an der Werkstückaufnahmespindel 38 eine Sensoranordnung 60 zum Referenzieren vorgesehen ist. Hierauf wird im Folgenden noch im Detail eingegangen.

Die Sensoranordnung 60 weist einen im Wesentlichen würfelförmigen Sensorträger 160 auf, der an drei zueinander orthogonalen Flächen hochempfindliche Berührungssensoren 162, 164, 166 aufweist. Der Berührungssensor 162 dient zur Erfassung einer Berührung in Richtung Z1 (siehe Figur 1), Berührungssensor 164 dient zur Erfassung einer Berührung in Richtung Y1 (siehe Figur 1) und der Berührungssensor 166 dient zur Erfassung einer Berührung in Richtung X1 (siehe Figur 1). Der Sensorträger 160 ist über eine Halteanordnung 168 an einer Stirnfläche 170 der Werkstückaufnahmespindel 38 angebracht.

Das Bearbeitungswerkzeug 30 wird an das untere Ende des hängenden Rotationswerkstücks 44 zur Bearbeitung einer Schneide seines Funktionsabschnitts herangeführt. Hierzu ist die Bearbeitungsspindel 28 in der dargestellten Situation ebenfalls vertikal ausgerichtet. Oberhalb und unterhalb des Bearbeitungswerkzeugs 30 sind Rohre 62 vorgesehen, die zum Zuführen von Kühl-/Schmier-Mittel an die Bearbeitungsstelle dienen. Diese Rohre 62 sind in ihrer Anordnung und Geometrie genau auf das Bearbeitungswerkzeug 30 abgestimmt. Sie sind an einem Werkzeugträger angeordnet, der lose das Bearbeitungswerkzeug 30 trägt, wobei die Einheit aus Werkzeugträger, Rohren 62 und Bearbeitungswerkzeug 30 als Ganzes an das Magazin 50 übergebbar und von diesem entnehmbar ist.

Der Werkstückwechselarm 32 mit seinem Greifer 34 befindet sich in einer Passivstellung, in der er im Wesentlichen vertikal liegt.

Man erkennt in Figur 2 auch, dass das Rotationswerkstück 44 verhältnismäßig komplizierte Geometrie mit einer Vielzahl von Funktionsflächen aufweist, die im Einzelnen bearbeitet werden müssen. Hierzu ist es erforderlich, das Bearbeitungswerkzeug 30 und ebenso das Rotationswerkstück 44 in verschiedenste Relativlagen durch translatorische Bewegungen und Verkippbewegungen zueinander zu bringen. All diese Relativlagen lassen sich mit der erfindungsgemäßen Vorrichtung erzielen, wobei diese zugleich eine kompakte Gestalt aufweist. Der wesentliche Vorteil, der sich in Figur 2 in besonderer Weise zeigt, liegt in der hängenden Anordnung des zu bearbeitenden Rotationswerkstücks.

Mit der gezeigten Anordnung ergeben sich insbesondere die folgenden Vorteile:
- Das Rotationswerkstück 44 unterliegt in einer Einspannsituation bei rein vertikaler Ausrichtung keinen gravitationsbedingten Biegebelastungen. Selbst bei einem Verschwenken um die Schwenkachse B1 sind die Biegebelastungen zu vernachlässigen.
- Die Werkstückaufnahmeeinrichtung 46 wird aufgrund ihrer Anordnung oberhalb der Bearbeitungsstelle nicht durch Materialabtrag und während der Bearbeitung auftretende Späne verschmutzt.
- Translatorisch bedingte Schwingungen an dem zu bearbeitenden Rotationswerkstück treten nur minimal in dessen Längsrichtung auf. Querschwingungen treten aufgrund fehlender translatorischer Verlagerung dieses Werkstücks nicht auf. Dadurch lassen sich Bearbeitungszeiten verkürzen, weil kein "Beruhigen" eines verlagerten Rotationswerkstücks zum Abbau von Schwingungen erforderlich ist.
- In vielen Bearbeitungssituationen werden die Rotatiönswerkstücke so bearbeitet, wie sie später auch eingesetzt werden. Man erkennt dies besonders gut in Figur 2, wo ein Fräser, der üblicherweise auch in hängender Anordnung in der Fräsmaschine eingesetzt wird, in entsprechender Anordnung bearbeitet wird.

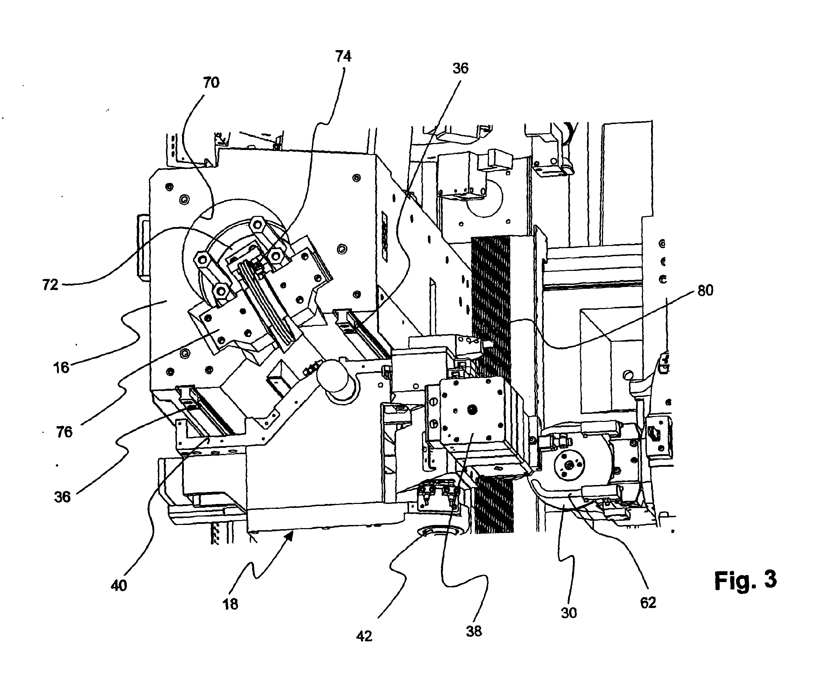

In Figur 3 erkennt man in der Draufsicht die Säulenstruktur 16 der Maschinenbasis. Man erkennt, dass diese Säulenstruktur 16 mit einem Hohlraum 70 ausgebildet ist. In diesem Hohlraum 70 ist ein Gegengewicht 72 in vertikaler Richtung geführt aufgenommen. Dieses Gegengewicht 72 ist über ein nicht gezeigtes Seil oder eine Kette mit dem in vertikaler Richtung verlagerbaren Schlitten 40 verbunden. Das Seil bzw. die Kette ist über eine an der Säulenstruktur gelagerte Rolle 74 geführt. Die Rolle 74 ist in seitlich angeordneten Lageranordnungen 76 reibungsarm gelagert.

Durch das Koppeln des Schlittens 40, an dem die Werkstückpositioniereinrichtung mit der Werkstückaufnahmespindel 38 angeordnet ist, mit dem Gegengewicht 72 über das über die Rolle 74 geführte Seil/Kette kann das Gewicht der Werkstückpositioniereinrichtung 18 "neutralisiert" werden, so dass diese trotz ihres erheblichen Eigengewichts mit verhältnismäßig geringem Kraftaufwand in vertikaler Lage zum Positionieren des Rotationswerkstücks verlagert werden kann. Für eine exakte Positionierung sorgen ein im Einzelnen nicht gezeigter Stelltrieb, sowie die Linearführungen 36, die an der Säulenstruktur 16 angebracht sind.

In Figur 3 erkennt man ferner eine Abrichteinrichtung 80, mit der das Bearbeitungswerkzeug 30, beispielsweise eine Schleifscheibe, bei Bedarf abgerichtet werden kann. Die Abrichteinrichtung 80 ist in der gezeigten Darstellung als stehende Abrichteinrichtung ausgeführt, d.h. sie bewegt sich ihrerseits nur translatorisch, nicht aber rotatorisch. Alternativ ist es auch möglich, eine rotatorische Abrichteinrichtung vorzusehen, beispielsweise mit einer sich drehenden Abrichtscheibe.

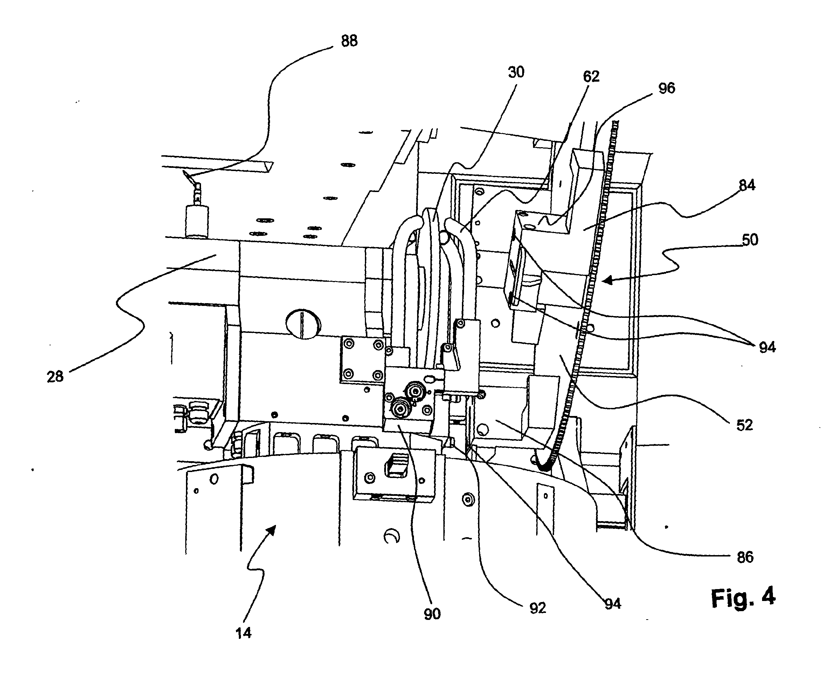

Figur 4 zeigt die Situation am Magazin 50. An der Drehscheibe 52 des Magazins 50 sind mehrere Werkzeughalter 84, 86 über den Umfang verteilt angeordnet. Die Bearbeitungseinrichtung 14 ist über die nicht gezeigte Kreuzschlittenanordnung 20 an das Magazin 40 herangefahren worden, wobei zugleich die Bearbeitungsspindel 28 in horizontale Lage verdreht wurde. In Figur 4 erkennt man ferner, das an der Bearbeitungsspindel 28 noch ein Tastsensor 88 angebracht ist, der zum Abtasten des Rotationswerkstücks vor und nach der Bearbeitung dient.

Figur 4 zeigt auch den Werkzeugträger 90, wie er gerade an dem Werkzeughalter 86 im Magazin 50 herangefahren wird. Obgleich der Aufbau des Werkzeugträgers 90 im Folgenden noch im Detail erläutert wird, sei angemerkt, dass dieser Haltestifte 92 aufweist, die in korrespondierende Öffnungen 94 im Werkzeughalter 86 einsteckbar sind. Ferner weist der Werkzeughalter 86 (ebenso 84) Halteflächen 96 auf, an denen der Werkzeugträger anliegen kann.

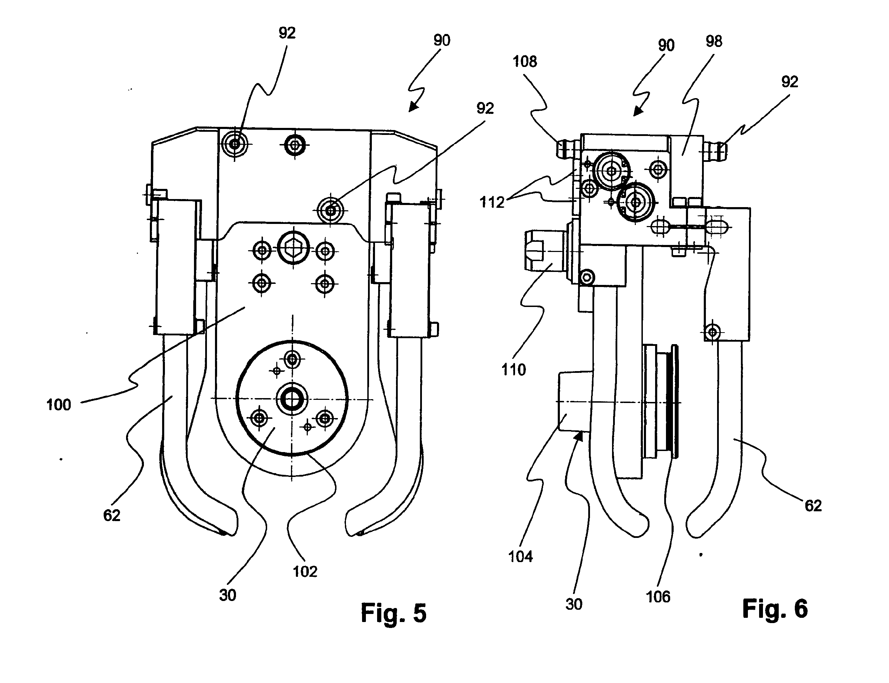

In Figuren 5, 6 und 7 sind Darstellungen des Werkzeugträgers 90 in verschiedenen Ansichten gezeigt. Man erkennt, dass der Werkzeugträger eine Basis 98 aufweist, an der eine Trägerplatte 100 angebracht ist. Die Trägerplatte 100 weist eine zentrale Öffnung 102 auf, in der das eigentliche Bearbeitungswerkzeug 30, im gezeigten Fall eine Schleifscheibe, aufgenommen ist. Das Bearbeitungswerkzeug 30 umfasst einen Aufnahmekegel 104 zur Aufnahme in der Bearbeitungsspindel und einen scheibenförmigen Schleifkörperflansch 106.

Die Öffnung 102 ist gestuft mit Hinterschneidungen ausgebildet und nimmt das Bearbeitungswerkzeug 30 lose auf, so dass es um seine zentrale Drehachse in der Platte 100 drehbar ist.

An der Basis 98 sind die Haltestifte 92 zur Anbringung am Magazin angebracht. Ferner sind an der Basis weitere Haltestifte 108 vorgesehen, die zur Anbringung, insbesondere Positionierung, an der Bearbeitungseinrichtung dienen. Hierzu ist auch ein Fixierzapfen 110 vorgesehen, mit dem der Werkzeugträger 90 fest an der Bearbeitungseinrichtung fixiert wird. In Figur 6 erkennt man auch Koppelstutzen 112 in der Seitenansicht, die zum fluidischen Ankoppeln von in der Basis 98 integrierten Fluidkanälen dienen. Diese Fluidkanäle kommunizieren fluidisch mit den Rohren 62 zum Zuführen von Kühl- und Schmiermittel an die Bearbeitungsstelle.

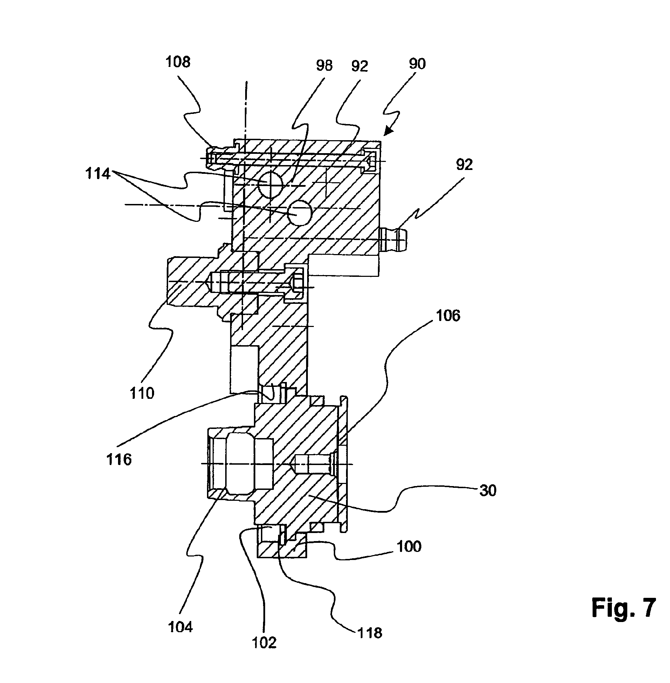

In der Längsschnittdarstellung durch den Werkzeugträger 90 gemäß Figur 7 erkennt man dessen Aufbau, wobei die Basis 98 integral mit der Platte 100 ausgebildet ist. Man erkennt in der Basis 98 die Fluidkanäle 114 zum Führen des Kühl-Schmiermittels zu den nicht gezeigten Rohren 62. Darüber hinaus erkennt man den am Werkzeugträger befestigten Zapfen 110. Schließlich erkennt man auch das Bearbeitungswerkzeug 30 im Schnitt, sowie die gestufte Innenoberfläche 116 der Öffnung 102, in der das Werkzeug drehbar gehalten und über einen Sicherungsring 118 gegen ein Herausfallen gesichert ist.

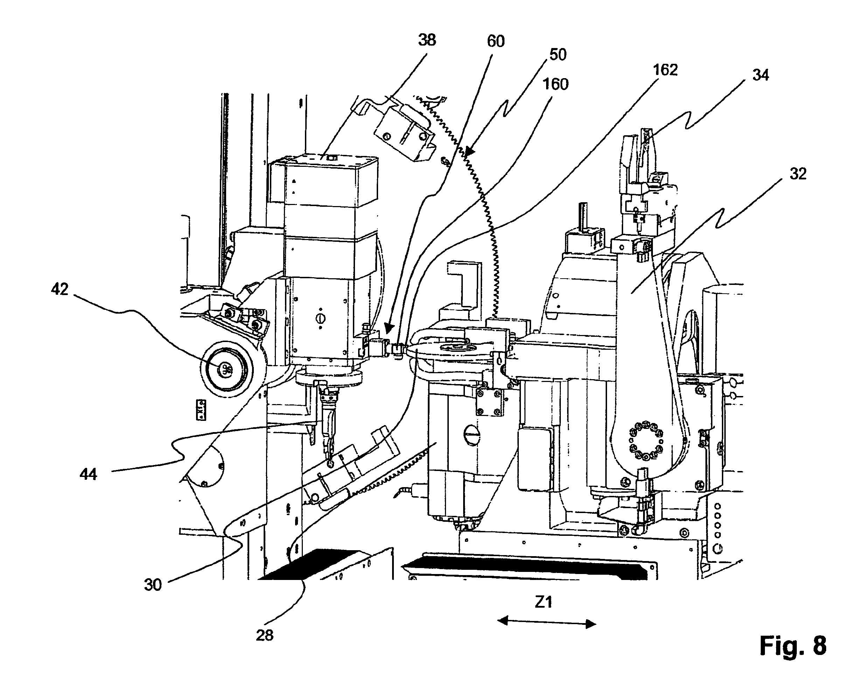

Figur 8 zeigt eine Referenziersituation, in der die Relativlage zwischen der Werkstückpositioniereinrichtung, insbesondere der Werkstückaufnahmespindel 38 und damit dem Rotationswerkstück 44, und dem Bearbeitungswerkzeug 30 über die Sensoranordnung 60 ermittelt wird. In Figur 8 wird gerade die Relativlage bezüglich der Richtung Z1 (siehe Figur 1) mit dem Sensor 162 ermittelt, d.h. in horizontaler Querrichtung. Der Sensor 162 ist ein hochsensibler Berührungssensor, der bereits bei einer Kraft von wenigen Millinewton (mN) anspricht. Er könnte alternativ zu einer Ausgestaltung als Berührungssensor auch als berührungsloser Nährungssensor ausgebildet sein.

Auf diese Weise lässt sich in unmittelbarer räumlicher Nähe zu dem zu bearbeitenden Rotationswerkstück 44 die Lage des Werkzeugs 30 und dessen Bearbeitungsflächen ermitteln. Dadurch erhält man eine exakte Ausrichtung von Rotationswerkstück 44 einerseits und Bearbeitungswerkzeug 30 andererseits zueinander, so dass man hochpräzise Bearbeitungsvorgänge mit hoher Qualität ausführen kann.

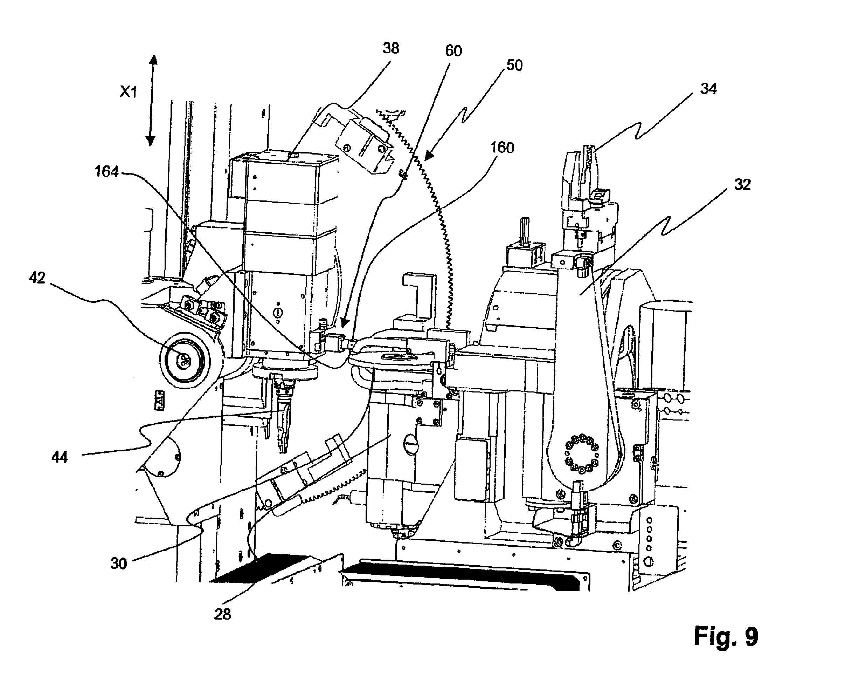

Figur 9 zeigt eine ähnliche Referenziersituation, wobei jedoch die Referenzierung in vertikaler Richtung X1 (siehe Figur 1) erfolgt. Die Sensoranordnung 60 tastet in vertikaler Richtung (von oben) mit dem Sensor 164 auf das Bearbeitungswerkzeug 30 und erfasst dessen Relativlage in dieser Richtung im Verhältnis zu dem zu bearbeitenden Rotationswerkstück 44.

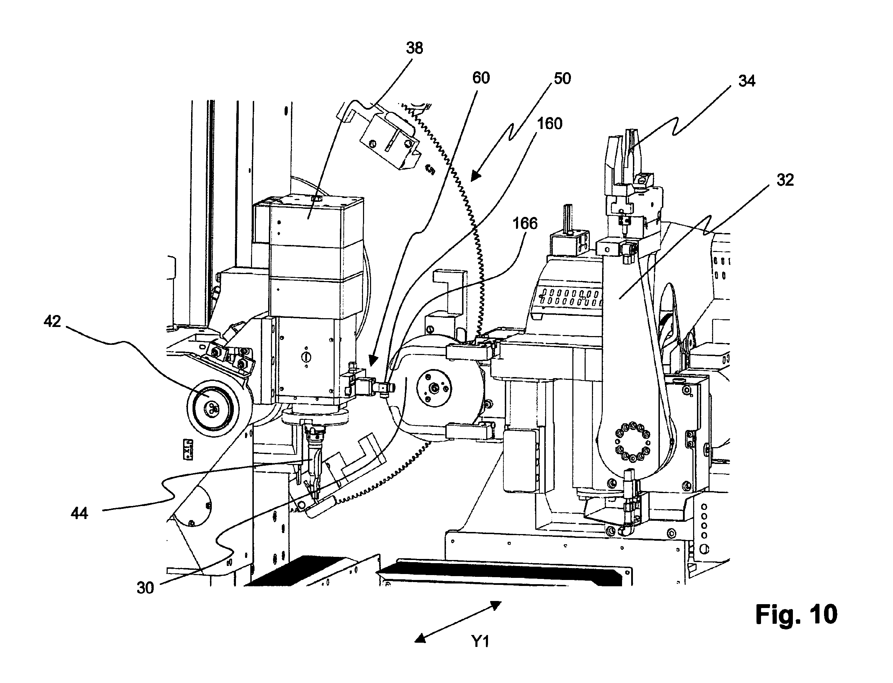

Figur 10 zeigt eine weitere Referenziersituation. Bei dieser wurde die Bearbeitungsspindel gegenüber der Ausrichtung gemäß Figuren 8 und 9 um 90° Grad in horizontale Lage gedreht. Das Bearbeitungswerkzeug 30 wird in Richtung Y1 (siehe Figur 1) über den Berührungssensor 166 abgetastet.

Hinsichtlich der Referenzierung über den Sensoranordnung 60 bietet die erfindungsgemäße Vorrichtung den Vorteil, dass im Prozess referenziert werden kann, d.h. während kurzer Bearbeitungspausen, beispielsweise nach einem Austausch eines Bearbeitungswerkzeugs. Dadurch können Bearbeitungsfehler, die sich aus einem Werkzeugwechsel oder aber auch aufgrund thermischer Maßänderungen ergeben, vermieden werden. Beeinträchtigungen des Bearbeitungsergebnisses aufgrund von Verschleiß am Werkzeug oder aufgrund der Einspannsituation des Werkzeugs wegen der Toleranzen des Aufnahmekegels können somit vorab kompensiert werden. Darüber hinaus ist durch die Referenzierung eine Plausibilitätskontrolle sowie eine Sicherheitskontrolle möglich, d.h. es kann abgeprüft werden, ob die Achsen zueinander richtig stehen, ob das Werkzeug sowie das Rotationswerkstück zueinander richtig stehen, ob überhaupt das richtige Werkzeug eingespannt wurde usw. Wesentlich ist hierbei auch die ortsnahe Anordnung des Sensoranordnung 60 zum Werkstück 44, so dass Störeinflüsse, wie thermische Ausdehnung, Biegungen etc. klein gehalten werden können.

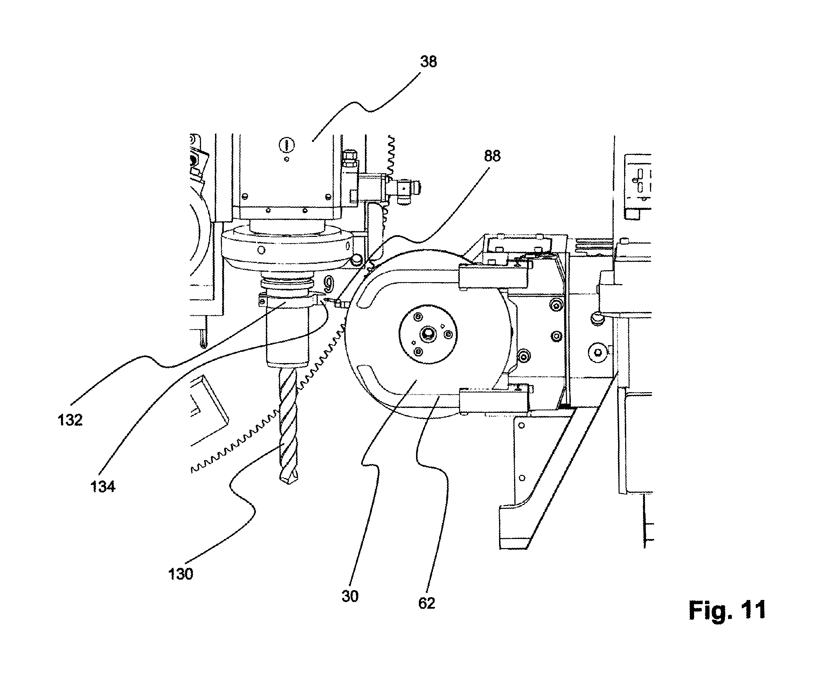

Figur 11 zeigt eine weitere Bearbeitungssituation, bei der ein Bohrer 130 mit einem Referenzflächenträger 132 versehen ist und mit einem Aufnahmeabschnitt in der Werkstückaufnahmespindel 38 eingespannt ist. Der Referenzflächenträger bleibt fest an dem Bohrer während der gesamten Bearbeitung festgespannt und umfasst eine Referenzfläche 134, die in der in Figur 11 gezeigten Darstellung gerade mit dem Messtaster erfasst wird. Der Referenzflächenträger 132 ist bei der Bearbeitung des Bohrers deshalb erforderlich, weil dieser keine bestimmte Referenzfläche aufweist, bezüglich der eine Bearbeitung begonnen und beendet werden kann. Daher wird der Bohrer vor seiner Bearbeitung mit dem Referenzflächenträger 132 versehen, der die Referenzfläche 134 zur Vermessung darbietet. Bezüglich dieser Referenzfläche kann dann der Bohrer 130 bearbeitet werden.

## Patentansprüche

1. Vorrichtung (10) zum Bearbeiten, insbesondere Erodieren und Schleifen, von Werkstücken (44), mit
- einer Maschinenbasis (12),
- einer relativ zu der Maschinenbasis (12) verlagerbaren Bearbeitungseinrichtung (14),
- und einer relativ zur Maschinenbasis (12) verlagerbaren Werkstückpositioniereinrichtung (18),
wobei die Bearbeitungseinrichtung (14) ein relativ zur Maschinenbasis (12) verlagerbares, drehantreibbares Bearbeitungswerkzeug (30) zur Bearbeitung des Werkstücks (44) aufweist,
wobei weiter die Werkstückpositioniereinrichtung (18) eine relativ zur Maschinenbasis (12) verlagerbare Werkstückaufnahmeeinrichtung (46) zum Aufnehmen des Werkstücks (44) aufweist,
**dadurch gekennzeichnet, dass** an der Werkstückaufnahmeeinrichtung (46) eine Mehrachs-Referenziersensoranordnung (60) vorgesehen ist, mit der die Relativlage zwischen Werkstückaufnahmeeinrichtung (46) und Bearbeitungswerkzeug (30) in wenigstens zwei Dimensionen erfassbar ist.

2. Vorrichtung (10) nach Anspruch 1,
**dadurch gekennzeichnet, dass** die Mehrachs-Referenziersensoranordnung (60) jeweils einen Referenzsensor (162, 164, 166) in jeder Raumachsenrichtung (X1, Y1, Z1) aufweist.

3. Vorrichtung (10) nach Anspruch 2,
**dadurch gekennzeichnet, dass** jeder der Referenzsensoren (162, 164, 166) jeweils als Berührungssensor oder als berührungsloser Näherungssensor ausgebildet ist.

4. Vorrichtung (10) nach Anspruch 2 oder 3,
**dadurch gekennzeichnet, dass** die Mehrachs-Referenziersensoranordnung (60) an einem Sensorträger (160) angeordnet ist, wobei der Sensorträger (160) Sensorträger-Flächen aufweist, die im wesentlichen orthogonal zu den Raumachsenrichtungen (X1, Y1, Z1) ausgerichtet sind.

5. Vorrichtung (10) nach einem der vorangehenden Ansprüche,
**dadurch gekennzeichnet, dass** die Bearbeitungseinrichtung oder die Werkstückaufnahmeeinrichtung auf einer Kreuzschlittenanordnung (20) mit zueinander im wesentlichen orthogonalen, horizontal verlaufenden Schlittenachsen (Z1, Y1) angeordnet ist.

6. Vorrichtung (10) nach einem der vorangehenden Ansprüche,
**dadurch gekennzeichnet, dass** die Bearbeitungseinrichtung (14) eine um eine Bearbeitungsspindelachse (L1) drehantreibbare Bearbeitungsspindel (28) aufweist.

7. Vorrichtung (10) nach Anspruch 6,
**dadurch gekennzeichnet, dass** die Bearbeitungseinrichtung (14) eine Spindelschwenkeinrichtung aufweist, mittels der die Bearbeitungsspindel (28) um eine Spindelschwenkachse (E1) derart verschwenkbar ist, dass die Bearbeitungsspindelachse (L1) sowohl in horizontale als auch in vertikale Lage bringbar ist.

8. Vorrichtung (10) nach einem der vorangehenden Ansprüche,
**dadurch gekennzeichnet, dass** die Werkstückpositioniereinrichtung (18) eine um eine Werkstückaufnahmespindelachse (A1) drehantreibbare Werkstückaufnahmespindel (38) aufweist.

9. Vorrichtung (10) nach Anspruch 8,
**dadurch gekennzeichnet, dass** die Werkstückpositioniereinrichtung (18) eine Spindelkippeinrichtung (42) aufweist, mittels der die Werkstückaufnahmespindel (38) um eine Spindelkippachse (B1) derart verschwenkbar ist, dass das zu bearbeitende Rotationswerkstück (44) in vertikale Schrägstellung bringbar ist.

10. Vorrichtung (10) nach einem der vorangehenden Ansprüche,
**gekennzeichnet durch** einen Werkstückwechseleinrichtung (32) zum Aufnehmen und Wechseln des zu bearbeitenden Rotationswerkstücks (44).

11. Verfahren zum Bearbeiten, insbesondere Erodieren und Schleifen, von Werkstücken (44), mit einer Vorrichtung (10) nach einem der vorangehenden Ansprüche, wobei das Verfahren die Schritte umfasst:
- Aufnehmen eines zu bearbeitenden Werkstücks (44) in der Werkstückaufnahmeeinrichtung (46),
- Bestücken der Bearbeitungseinrichtung (14) mit einem Bearbeitungswerkzeug (30),
- Erfassen einzelner Komponenten der Relativlage zwischen der Werkstückaufnahmeeinrichtung (46) relativ zu dem an der Bearbeitungseinrichtung (14) angebrachten Bearbeitungswerkzeug (30), wobei das Bearbeitungswerkzeug (30) im Bereich einer mit dem Werkstück (44) zur Bearbeitung in Kontakt tretenden Bearbeitungsstelle mittels der Referenzier-Sensoranordnung (60) in wenigstens zwei Dimensionen (X1, Y1, Z1) abgetastet wird,
- Bestimmen der Relativlage zwischen der Werkstückaufnahmeeinrichtung (46) und der Bearbeitungseinrichtung (14) nach Maßgabe der mit der Referenzier-Sensoranordnung (60) bestimmten Komponenten der Relativlage in den wenigstens zwei Dimensionen (X1, Y1, Z1), und
- Durchführen der Bearbeitung des Werkstücks (44) mittels der Bearbeitungseinrichtung (14) nach Maßgabe der bestimmten Relativlage zwischen der Werkstückaufnahmeeinrichtung (46) und der Bearbeitungseinrichtung (14).

12. Verfahren nach Anspruch 11,
**dadurch gekennzeichnet, dass** die Relativlage zwischen der Werkstückaufnahmeeinrichtung (46) und der Bearbeitungseinrichtung (14) vor einer erstmaligen Bearbeitung eines Werkstücks (44), zwischen zwei Bearbeitungsschritten, nach einem Auswechseln des Bearbeitungswerkzeuges (30) oder nach einer bestimmten Zeitperiode eine Bearbeitung durchgeführt wird.
